(19) Europäisches Patentamt
European Patent Office
Office européen des brevets

(11) **EP 4 356 093 B1**

(12) **EUROPÄISCHE PATENTSCHRIFT**

(45) Veröffentlichungstag und Bekanntmachung des Hinweises auf die Patenterteilung:
**27.05.2026  Patentblatt 2026/22**

(21) Anmeldenummer: **22731186.7**

(22) Anmeldetag: **31.05.2022**

(51) Internationale Patentklassifikation (IPC):
*G01M 3/28* *(2006.01)*

(52) Gemeinsame Patentklassifikation (CPC):
**G01M 3/205; G01M 3/2876**

(86) Internationale Anmeldenummer:
**PCT/EP2022/064685**

(87) Internationale Veröffentlichungsnummer:
**WO 2022/263163 (22.12.2022 Gazette 2022/51)**

(54) **LECKDETEKTOREN**

LEAK DETECTORS

DÉTECTEURS DE FUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2021  DE 102021115664**

(43) Veröffentlichungstag der Anmeldung:
**24.04.2024  Patentblatt 2024/17**

(73) Patentinhaber: **Inficon GmbH**
**50968 Köln (DE)**

(72) Erfinder: **LIEBICH, Jörn**
**50968 Köln (DE)**

(74) Vertreter: **dompatent**
**Partnerschaft von Patentanwälten und Rechtsanwälten mbB**
**Deichmannhaus am Dom**
**Bahnhofsvorplatz 1**
**50667 Köln (DE)**

(56) Entgegenhaltungen:
**DE-A1- 102014 219 481      DE-A1- 3 421 533**
**DE-A1- 4 442 174      US-B1- 6 286 362**

## Beschreibung

Die Erfindung betrifft eine Leckdetektionsvorrichtung und ein Verfahren zum Belüften einer Leckdetektionsvorrichtung.

Leckdetektionsvorrichtungen zum Prüfen der Gasdichtheit eines Prüfobjekts weisen typischerweise einen Gasdetektor, bei dem es sich um ein Massenspektrometer handeln kann, und eine Vakuumpumpe auf, bei der es sich im Falle eines Massenspektrometers um eine zweistufige Turbomolekularpumpe handelt, deren Hochvakuumpumpstufe das Massenspektrometer und deren Vorvakuumpumpstufe den Anschluss für das Prüfobjekt evakuiert. Der Anschluss ist über eine Verbindungsleitung mit dem Gasdetektor und der Vakuumpumpe verbunden.

Ein Prüfobjekt wird an den Anschluss angeschlossen und mit der Vakuumpumpe evakuiert. Im Falle eines undichten Prüfobjekts gelangt Gas von außerhalb des Prüfobjekts durch das Leck in das Prüfobjekt und wird von dort dem Gasdetektor zugeführt und von diesem erkannt. Um derartige Leckdetektionsvorrichtungen zu belüften, ist die Verbindungsleitung zwischen der Vakuumpumpe, dem Gasdetektor und dem Anschluss für das Prüfobjekt mit einem Belüftungsventil versehen. Ein Belüften sollte beispielsweise erfolgen, bevor das Prüfobjekt von dem Anschluss getrennt wird. Allerdings kann es nachteilig sein, auch das Prüfobjekt zu belüften, weil dadurch der Druck im Prüfobjekt verändert wird und das Innere des Prüfobjekts verunreinigt werden kann. Daher ist es möglichst zu vermeiden, die Leckdetektionsvorrichtung zu belüften, wenn das Prüfobjekt noch gasleitend mit dem Anschluss verbunden ist.

DE 102014219481 A1 beschreibt eine Vorrichtung und ein Verfahren zum Kalibrieren einer Folienkammer zur Leckdetektion.

US 6,286,362 B1 beschreibt einen Vakuumleckdetektor mit zwei Partialdruck-Analysatoren.

Der Erfindung liegt die Aufgabe zugrunde, eine Leckdetektionsvorrichtung bereitzustellen, mit der ein sichereres und verbessertes Belüften möglich ist. Ebenfalls soll ein entsprechendes Verfahren zum Belüften einer Leckdetektionsvorrichtung bereitgestellt werden.

Die erfindungsgemäße Leckdetektionsvorrichtung ist definiert durch die Merkmale von Patentanspruch 1. Das erfindungsgemäße Verfahren ist definiert durch die Merkmale von Patentanspruch 6.

Der Anschluss oder die den Anschluss mit dem Gasdetektor und der Vakuumpumpe verbindende Verbindungsleitung ist mit einer Druckmessvorrichtung versehen, die dazu ausgebildet ist, den Druck am Anschluss zu messen. Die Verbindungsleitung ist ferner mit einem selektiv steuerbaren Belüftungsventil versehen. Mit der Druckmessvorrichtung wird der Druck $p(t1)$ am Anschluss gemessen und anschließend das Belüftungsventil kurzzeitig impulsartig geöffnet und anschließend wieder geschlossen, so dass während der Dauer des kurzen Impulses Gas aus der umgebenden Atmosphäre in die Verbindungsleitung und in den Anschluss einströmt. Hierbei können die Verbindungsleitung und der Anschluss als Eingangsbereich der Leckdetektionsvorrichtung bezeichnet werden. Das Einströmen von Luft oder Gas in den Eingangsbereich erfolgt dabei über das Belüftungsventil für einen kurzen Zeitraum von wenigen 100 Millisekunden, vorzugsweise von weniger als einer Sekunde oder von weniger als 500 Millisekunden. Nach dem Einlassen des Gases wird der Druck $p(t2)$ am Anschluss gemessen. Das Messen des Drucks $p(t2)$ erfolgt vorzugsweise nach wenigen 100 Millisekunden nach dem Belüften, vorzugsweise innerhalb eines Zeitraums zwischen 50 Millisekunden und einer Sekunde und vorzugsweise nach etwa 200 Millisekunden nach dem Belüften. Anhand der gemessenen Drücke $p(t1)$, $p(t2)$ wird automatisch der Schließzustand eines mit dem Anschluss verbundenen Isolationsventils beurteilt. Das Isolationsventil ist in einer gasleitenden Verbindung zwischen dem Anschluss und dem Prüfobjekt vorgesehen.

Wenn das Isolationsventil geschlossen ist, stellen sich am Anschluss andere Drücke $p(t1)$, $p(t2)$ ein, als im Falle eines geöffneten Isolationsventils, weil dann das an den Anschluss angeschlossene Volumen größer ist als im Falle eines geschlossenen Isolationsventils. Dies kann anhand der Drücke $p(t1)$, $p(t2)$ automatisch beurteilt werden.

Vorzugsweise erfolgt ein automatisches Belüften der Leckdetektionsvorrichtung über ein Belüftungsventil erst dann, wenn das Isolationsventil als geschlossen erkannt wird. Entsprechend kann ein automatisches Belüften der Leckdetektionsvorrichtung unterbunden werden, wenn das Isolationsventil als geöffnet erkannt wird.

Zum Erkennen des Schließzustands kann vorteilhafterweise die Differenz aus den Messwerten der beiden Drücke $p(t1)$, $p(t2)$ gebildet werden. Wenn die Differenz größer oder gleich einem vorgegebenen oder einstellbaren Schwellenwert ist, wird das Isolationsventil als geschlossen betrachtet und die Belüftung der Leckdetektionsvorrichtung kann erfolgen. Wenn die Differenz kleiner als der Schwellenwert ist, wird das Belüftungsventil als geöffnet angesehen und ein Belüften der Leckdetektionsvorrichtung wird vorzugsweise automatisch verhindert oder unterbunden.

Alternativ oder ergänzend kann eine Beurteilung des Schließzustands des Isolationsventils anhand des Verlaufs des Messignals des Drucksensors während eines Zeitraums erfolgen, beispielsweise durch Ermitteln der Steigung und/oder der Krümmung des Signalverlaufs. Alternativ oder ergänzend kann eine Beurteilung des Schließzustands des Isolationsventils anhand einer mathematischen Ableitung des Verlaufs des Messignals des Drucksensors während eines Zeitraums erfolgen, beispielsweise durch Ermitteln der ersten und/oder einer weiteren Ableitung des Signalverlaufs. Hierbei kann ein Vergleich der Ableitung mit einem Schwellenwert erfolgen.

Das erfindungsgemäße Verfahren wird vorteilhafterweise ausgeführt, nachdem ein Benutzer der Leckdetektionsvorrichtung ein Belüften der Leckdetektionsvorrichtung initiiert, zum Beispiel durch Betätigen einer entsprechenden Taste oder eines Bedienelements, um das Belüften nur im Falle eines geschlossenen Isolationsventils zu ermöglichen.

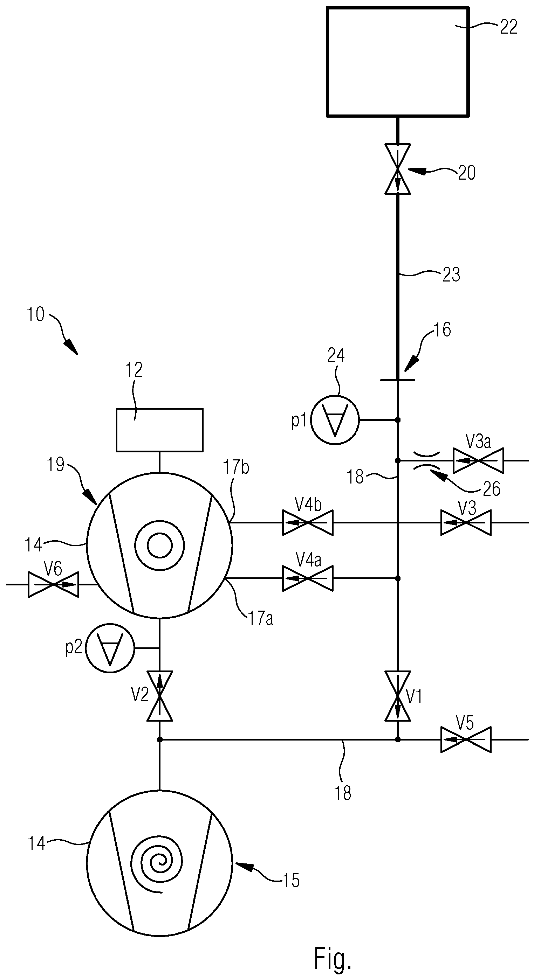

Im Folgenden wird anhand der Figur ein Ausführungsbeispiel der Erfindung näher erläutert. Die Figur zeigt eine schematische Darstellung des Ausführungsbeispiels.

Die Leckdetektionsvorrichtung 10 weist einen Gasdetektor 12 in Form eines Massenspektrometers und eine zweistufige Vakuumpumpe 14 auf, die mit dem Gasdetektor 12 verbunden ist, um den Gasdetektor 12 zu evakuieren. Ein Anschluss 16 ist über eine Verbindungsleitung 18 mit der Vakuumpumpe 14 und dem Gasdetektor 12 gasleitend verbunden, wobei die erste Pumpstufe eine Vorvakuumpumpe bildet und über die Verbindungsleitung 18 zum Evakuieren des Anschlusses 16 und eines an den Anschluss 16 angeschlossenen Prüfobjekts 22 vorgesehen ist, während ein Zwischengaseinlass der zweiten Pumpstufe in Form einer Hochvakuumpumpe ebenfalls über die Verbindungsleitung 18 mit dem Anschluss 16 verbunden ist, um Gas aus dem Prüfobjekt 22 im Gegenstrom in das Massenspektrometer einlassen zu können.

Die Verbindungsleitung 18 ist mit einem Belüftungsventil V3 zum Belüften der Leckdetektionsvorrichtung 10 verbunden. Das Belüftungsventil V3 ist zur Atmosphäre hin offen. Die Erfindung sieht vor, dass das Ventil V3 ausschließlich dann zum vollständigen Belüften der Leckdetektionsvorrichtung geöffnet wird und geöffnet werden kann, wenn erkannt wird, dass das mit dem Anschluss 16 verbundene Isolationsventil 20, das in der den Anschluss 16 mit dem Prüfobjekt 22 verbindenden gasleitenden Verbindung vorgesehen ist, geschlossen ist, um ein Belüften des Prüfobjekts 22 zu verhindern. Vorteilhafterweise sind das zur Atmosphäre hin offene Ende des ersten Belüftungsventils V3 und/oder des zweiten Belüftungsventils V3a mit einem in der Figur nicht dargestellten feinporigen Filter versehen, um einen Eintrag von Partikeln aus der Atmosphäre in die Leckdetektionsvorrichtung 10 und in das Prüfobjekt 22 zu reduzieren.

Hierzu ist eine in der Figur nicht dargestellte Steuer- und Auswertevorrichtung vorgesehen, die elektronisch mit der mit der gasleitenden Verbindung und dem Anschluss 16 verbundenen Druckmessvorrichtung 24 und dem ersten Belüftungsventil V3 und einem zweiten, über eine Drossel 26 ebenfalls mit der Verbindungsleitung 18 und dem Anschluss 16 verbundenen zweiten Belüftungsventil V3a verbunden ist. Nachdem ein Benutzer der Leckdetektionsvorrichtung 10 einen elektronischen Befehl zum Öffnen des ersten Belüftungsventils V3 generiert hat, zum Beispiel durch Betätigen einer entsprechenden Taste oder eines Bedienfelds der Leckdetektionsvorrichtung 10, wird zunächst der Druck p(t1) am Anschluss 16 mit der Druckmessvorrichtung 24 gemessen. Hierbei sind alle Ventile zu den Pumpanschlüssen geschlossen bzw. werden zuvor geschlossen. Anschließend wird automatisch kurzzeitig das zweite Belüftungsventil V3a für einen Zeitraum von wenigen 100 Millisekunden geöffnet und anschließend wieder geschlossen, während das erste Belüftungsventil V3 weiterhin geschlossen bleibt, um dadurch dem Anschluss 16 einen kurzen Gaspuls zuzuführen. Nach etwa 200 Millisekunden ab dem Schließen des zweiten Belüftungsventils V3a wird der Druck p(t2) am Anschluss 16 mit Hilfe der Druckmessvorrichtung 24 gemessen.

Mit der Auswertevorrichtung wird anschließend die Differenz aus den Druckmesswerten der beiden Drücke p(t1), p(t2) gebildet und die gebildete Differenz p(t2)-p(t1) mit einem vorgegebenen Schwellenwert verglichen. Der Schwellenwert kann vorgegeben sein und/oder von einem Bediener vorgewählt werden. Der Schwellwert wird aus dem erwarteten Druckanstieg ermittelt. Der erwartete Druckanstieg leitet sich aus dem Leitwert bzw. dem Gasfluss Q durch die Drossel 26, dem Volumen V der Verbindungsleitung 18 im Segment zwischen den geschlossenen Ventilen 20 und V1 und der Öffnungsdauer t des Ventils V3a ab. Der erwartete Druckanstieg berechnet sich wie folgt:

$$\Delta p = \frac{Q \cdot t}{V}$$

Vorzugsweise beträgt der Schwellenwert etwa die Hälfte des erwarteten Druckstiegs, bei einem Gasfluss Q = 1 mbar·l/s und einem Volumen von 1 ltr bei einer Ventilöffnugsdauer von t=100ms also etwa 0,05mbar.

Wenn die Differenz oberhalb des Schwellenwerts oder gleich dem Schwellenwert ist, wird das Isolationsventil 20 automatisch als geschlossen angesehen. Eine große Differenz oberhalb des Schwellenwerts deutet nämlich auf ein geringes Volumen jenseits des Anschlusses 16 hin. Wenn andererseits die Differenz unterhalb des Schwellenwerts liegt, deutet dies auf ein großes Volumen jenseits des Anschlusses 16 hin und die Auswertevorrichtung sieht dann das Isolationsventil 20 automatisch als geöffnet an. In diesem Fall wird ein Öffnen des ersten Belüftungsventils V3 verhindert oder ein Benutzer wird gefragt, ob das Öffnen des ersten Belüftungsventils V3 tatsächlich erfolgen soll, obwohl das Isolationsventil 20 geöffnet ist. Im Falle eines als geschlossen erkannten Isolationsventils 20 wird das erste Belüftungsventil V3 automatisch geöffnet.

Bei einem anderen, in der Figur nicht dargestellten Ausführungsbeispiel erfolgt das Belüften des Anschlusses 16 zwischen dem Messen der beiden Drücke p(t1), p(t2) mit demselben ersten Belüftungsventil V3 wie das Belüften der Leckdetektionsvorrichtung 10. Ein separates zweites Belüftungsventil V3a ist in diesem Fall nicht erforderlich.

Die Erfindung verhindert somit ein versehentliches Belüften der Leckdetektionsvorrichtung 10 bei geöffnetem Isolationsventil 20 und angeschlossenem Prüfobjekt 22, um ein Belüften des Prüfobjekts 22 zu verhindern. Hierzu erfolgt nach dem Messen des Drucks p(t1) am Anschluss 16 gewissermaßen ein Testbelüften des Anschlusses 16, bevor der zweite Druck p(t2) am Anschluss 16 gemessen wird. Anhand des Testbelüftens und des damit verbundenen Druckanstiegs am Anschluss 16 wird der Schließzustand des Isolationsventils 20 ermittelt, um nur im Falle eines geschlossenen Isolationsventils 20 ein Belüften der Leckdetektionsvorrichtung 10 zu gestatten.

**Patentansprüche**

1. Leckdetektionsvorrichtung (10) mit einem Gasdetektor (12), einer Vakuumpumpe (14), einem Anschluss (16) für ein Prüfobjekt (22) und eine den Anschluss (16) mit dem Gasdetektor (12) und der Vakuumpumpe (14) verbindende Verbindungsleitung (18),
**dadurch gekennzeichnet,**

   **dass** der Anschluss (16) ein steuerbares Isolationsventil (20) in einer gasleitenden Verbindung (23) zwischen dem Anschluss (16) und dem Prüfobjekt (22) zum selektiven Öffnen oder Schließen des Anschlusses (16) aufweist und,
   **dass** ein Druckmessgerät (24) zum Messen des Drucks am Anschluss (16) vorgesehen ist und die Verbindungsleitung (18) ein steuerbares Belüftungsventil (V3, V3a) zum selektiven impulsartigen Einströmenlassen von Gas aus der umgebenden Atmosphäre zu dem Anschluss (16) aufweist,
   wobei die Leckdetektionsvorrichtung (10) dazu ausgebildet ist, den Druck p(t1) am Anschluss (16) zu einem ersten Zeitpunkt t1 vor dem Öffnen des Belüftungsventils zu messen, anschließend das Belüftungsventil impulsartig zu öffnen und wieder zu schließen und den Druck p(t2) am Anschluss (16) mindestens zu einem zweiten Zeitpunkt t2 > t1 nach dem Schließen des Belüftungsventils zu messen und anhand der gemessenen Drücke p(t1), p(t2) zu beurteilen, ob das Isolationsventil (20) geöffnet oder geschlossen ist, um ein Belüften eines an den Anschluss (16) angeschlossenen Prüfobjekts (22) zu verhindern, indem das Belüftungsventil (V3, V3a) zum vollständigen Belüften der Leckdetektionsvorrichtung (10) ausschließlich bei geschlossenem Isolationsventil (20) geöffnet wird.

2. Leckdetektionsvorrichtung (10) nach Anspruch 1, **dadurch gekennzeichnet, dass** die Leckdetektionsvorrichtung (10) eine Auswerteeinheit aufweist, die die Messwerte der Drücke p(t1), p(t2), erfasst, das Belüftungsventil (V3, V3a) steuert und die Beurteilung des Schließzustands des Isolationsventils automatisch ausführt.

3. Leckdetektionsvorrichtung (10) nach Anspruch 1 oder 2, **dadurch gekennzeichnet, dass** das Belüftungsventil (V3, V3a) über eine Drossel (26) mit der Verbindungsleitung (18) verbunden ist.

4. Leckdetektionsvorrichtung (10) nach einem der vorhergehenden Ansprüche, **dadurch gekennzeichnet, dass** der Gasdetektor (12) ein Massenspektrometer und die Vakuumpumpe (14) eine Hochvakuumpumpe mit mindestens zwei Pumpstufen ist.

5. Leckdetektionsvorrichtung (10) nach einem der vorhergehenden Ansprüche, **dadurch gekennzeichnet, dass** das erste Belüftungsventil (V3) und/oder ein zweites Belüftungsventil (V3a) eine Öffnung zur Atmosphäre hin aufweisen, die mit einem feinporigen Filter verschlossen ist, der einen Eintrag von Partikeln aus der Atmosphäre in die Leckdetektionsvorrichtung (10) reduziert.

6. Verfahren zum Belüften einer Leckdetektionsvorrichtung (10) mit einem Gasdetektor (12), einer Vakuumpumpe (14), einem Anschluss (16) für ein Prüfobjekt (22) und einer den Anschluss (16) mit dem Gasdetektor (12) und der Vakuumpumpe (14) verbindenden Verbindungsleitung (18), **gekennzeichnet durch** die Schritte:

   - Messen des Drucks p(t1) am Anschluss (16) zu einem ersten Zeitpunkt t1,
   - impulsartiges Zuführen von Gas aus der umgebenden Atmosphäre oder aus einer Gasversorung zu dem Anschluss (16),
   - Messen des Drucks p(t2) mindestens zu einem zweiten Zeitpunkt t2 > t1 nach dem Zuführen von Gas zu dem Anschluss (16),
   - Beurteilen des Schließzustandes eines an den Anschluss (16) angeschlossenen Isolationsventils (20), das zur Verbindung zwischen dem Anschluss (16) und dem Prüfobjekt (22) vorgesehen ist, anhand der Messwerte p(t1), p(t2) der gemessenen Drücke am Anschluss (16), um ein Belüften eines an den Anschluss (16) angeschlossenen Prüfobjekts (22) zu verhindern, indem das Belüftungsventil (V3, V3a) zum vollständigen Belüften der Leckdetektionsvorrichtung (10) ausschließlich bei geschlossenem Isolationsventil (20) geöffnet wird.

7. Verfahren nach dem vorhergehenden Anspruch, **dadurch gekennzeichnet, dass** zum Beurteilen des Schließzustands des Isolationsventils (20) die Differenz aus dem Messwert des Drucks p(t1) und dem Messwert des Drucks p(t2) gebildet wird und das Isolationsventil (20) als geschlossen angesehen wird, wenn die Differenz oberhalb eines Schwellenwertes liegt und wobei das Isolationsventil (20) als geöffnet angesehen wird, wenn die Differenz unterhalb des Schwellenwerts liegt.

8. Verfahren nach einem der vorhergehenden Ansprüche, **dadurch gekennzeichnet, dass** zum Beurteilen des Schließzustands des Isolationsventils (20) der Verlauf des die Druckmesswerte p aufweisenden Messignals während eines Zeitraums ermittelt und ausgewertet wird, beispielsweise durch Ermitteln der Steigung und/oder der Krümmung des Signalverlaufs.

9. Verfahren nach einem der vorhergehenden Ansprüche, **dadurch gekennzeichnet, dass** zum Beurteilen des Schließzustands des Isolationsventils (20) eine mathematische Ableitung des Verlaufs des die Druckmesswerte p aufweisenden Messignals während eines Zeitraums ermittelt und ausgewertet wird, beispielsweise durch Ermitteln der ersten und/oder einer weiteren Ableitung des Signalverlaufs.

10. Verfahren nach einem der Ansprüche 7-9, **dadurch gekennzeichnet, dass** der Anschluss (16) automatisch belüftet wird, wenn die Differenz oberhalb des Schwellenwertes liegt und/oder das Isolationsventil (20) als geschlossen angesehen wird.

11. Verfahren nach einem der Ansprüche 7-10, **dadurch gekennzeichnet, dass** der Anschluss (16) nicht belüftet wird, wenn die Differenz unterhalb des Schwellenwertes liegt und/oder das Isolationsventil (20) als geöffnet angesehen wird.

12. Verfahren nach einem der vorhergehenden Ansprüche, **dadurch gekennzeichnet, dass** das Zuführen von Gas zu dem Anschluss (16) vor dem Messen des Drucks p(t2) und nach dem Messen des Drucks p(t1) für einen Zeitraum von wenigen Sekunden und vorzugsweise von weniger als einer Sekunde erfolgt.

13. Verfahren nach Anspruch 12, **dadurch gekennzeichnet, dass** das Messen des Drucks p(t2) innerhalb eines Zeitraums von mindestens 50 Millisekunden und von weniger als einer Sekunde nach dem Belüften des Anschlusses (16) erfolgt.

14. Vorrichtung oder Verfahren nach einem der vorhergehenden Ansprüche, **dadurch gekennzeichnet, dass** das Belüften der Leckdetektionsvorrichtung (10) im Falle eines als geschlossen erkannten Isolationsventils (20) mit einem anderen Ventil erfolgt, als das Zuführen von Gas zu dem Anschluss (16) zwischen den Messungen der beiden Drücke p(t1), p(t2) an dem Anschluss (16).

## Claims

1. A leak detection device (10) comprising a gas detector (12), a vacuum pump (14), a port (16) for a test object (22) and a connection line (18) connecting the port (16) to the gas detector (12) and the vacuum pump (14),

   **characterized in that**

   the port (16) has a controllable isolation valve (20) in a gas-conducting connection (23) between the port (16) and the test object (22) for selectively opening or closing the port (16) and, a pressure measuring device (24) is provided for measuring the pressure at the port (16) and the connecting line (18) has a controllable venting valve (V3, V3a) for the selective pulse-like inflow of gas from the surrounding atmosphere to the port (16),

   wherein the leak detection device (10) is configured to measure the pressure p(t1) at the port (16) at a first time t1 before the venting valve is opened, then to open and close the venting valve in a pulsed manner and to measure the pressure p(t2) at the port (16) at least at a second time t2 > t1 after the venting valve is closed and to evaluate on the basis of the measured pressures p(t1), p(t2) whether the isolation valve (20) is open or closed in order to prevent ventilation of a test object (22) connected to the port (16) by opening the venting valve (V3, V3a) for complete ventilation of the leak detection device (10) only when the isolation valve (20) is closed.

2. The leak detection device (10) according to claim 1, **characterized in that** the leak detection device (10) comprises an evaluation unit that detects the measuring values of the pressure p(t1), p(t2), controls the venting valve (V3, V3a), and automatically performs the evaluation of the closing state of the isolation valve.

3. The leak detection device (10) according to claim 1 or 2, **characterized in that** the venting valve (V3, V3a) is connected to the connection line (18) via a throttle (26).

4. The leak detection device (10) according to one of the preceding claims, **characterized in that** the gas detector (12) is a mass spectrometer and the vacuum pump (14) is a high vacuum pump with at least two pump stages.

5. The leak detection device (10) according to one of the preceding claims, **characterized in that** the first venting valve (V3) and/or a second venting valve (V3a) comprise an opening towards atmosphere, which is closed by a fine-pored filter that reduces an introduction of particles from the atmosphere into the leak detection device (10).

6. A method for venting a leak detection device (10) comprising a gas detector (12), a vacuum pump (14), a port (16) for a test object (22) and a connection line (18) connecting the port (16) to the gas detector (12) and the vacuum pump (14), **characterized by** the following steps:

   - measuring the pressure p(t1) at the port (16) at a first time t1,
   - supplying gas in a pulse-like manner from the surrounding atmosphere or from a gas supply to the port (16),
   - measuring the pressure p(t2) at least at one second time t2 > t1 after the supply of gas to the port (16),
   - evaluating the closing state of an isolation valve (20) connected to the port (16), which is provided for connection between the port (16) and the test object (22), on the basis of the measured values p(t1), p(t2) of the measured pressures at the port (16), in order to prevent ventilation of a test object (22) connected to the port (16) by opening the ventilation valve (V3, V3a) for complete ventilation of the leak detection device (10) only when the isolation valve (20) is closed.

7. The method according to the preceding claim, **characterized in that** for determining the closing state of the isolation valve (20), the difference between the measuring value of the pressure p(t1) and the measuring value of the pressure p(t2) is calculated and the isolation valve (20) is considered to be closed if the difference is above a threshold value, and wherein the isolation valve (20) is considered to be open if the difference is below the threshold value.

8. The method according to one of the preceding claims, **characterized in that** for determining the closing state of the isolation valve (20), the path of the measuring signal comprising the pressure measurement values p during a period is obtained and evaluated, for example by obtaining the gradient and/or the curvature of the signal path.

9. The method according to one of the preceding claims, **characterized in that** for determining the closing state of the isolation valve (20), a mathematical derivation of the path of the measuring signal comprising the pressure measurement values p during a period is obtained and evaluated, for example by obtaining the first and/or a further derivative of the signal path.

10. The method according to one of claims 7-9, **characterized in that** the port (16) is vented automatically if the difference is above the threshold value and/or the isolation valve (20) is considered to be closed.

11. The method according to one of claims 7-10, **characterized in that** the port (16) is not vented if the difference is below the threshold value and/or the isolation valve (20) is considered to be open.

12. The method according to one of the preceding claims, **characterized in that** supplying gas to the port (16) prior to measuring the pressure p(t2) and after measuring the pressure p(t1) is performed for a period of a few seconds and preferably less than one second.

13. The method according to claim 12, **characterized in that** measuring the pressure p(t2) is performed within a period of at least 50 milliseconds and less than one second after venting the port (16).

14. The device or the method according to one of the preceding claims, **characterized in that**, if an isolation valve (20) is detected to be closed, venting the leak detection device (10) is performed using another valve than the one used in supplying gas to the port (16) between the measurements of the two pressures p(t1), p(t2) at the port (16).

**Revendications**

1. Dispositif de détection de fuite (10) avec un détecteur de gaz (12), une pompe à vide (14), un raccord (16) pour un objet à tester (22) et une conduite de liaison (18) reliant le raccord (16) au détecteur de gaz (12) et à la pompe à vide (14),
   **caractérisé en ce**

   **que** le raccord (16) présente une vanne d'isolement (20) pouvant être commandée dans une liaison (23) conductrice de gaz entre le raccord (16) et l'objet à tester (22) pour l'ouverture ou la fermeture au choix du raccord (16) et,
   **qu'**un appareil de mesure de pression (24) est prévu pour mesurer la pression sur le raccord (16) et la conduite de liaison (18) présente une vanne d'aération (V3, V3a) pouvant être commandée pour laisser s'écouler au choix par impulsions du gaz provenant de l'atmosphère environnante vers le raccord (16),
   dans lequel le dispositif de détection de fuite (10) est réalisé pour mesurer la pression p(t1) sur le raccord (16) à un premier moment t1 avant l'ouverture de la vanne d'aération, puis ouvrir et refermer la vanne d'aération par impulsions et mesurer la pression p(t2) sur le raccord (16) à au moins un deuxième moment t2 > t1 après la fermeture de la vanne d'aération et apprécier, à l'aide des pressions mesurées p(t1), p(t2), si la vanne d'isolement (20) est ouverte ou fermée pour empêcher une aération d'un objet à tester (22) raccordé au raccord (16) en ouvrant la vanne d'aération (V3, V3a) pour aérer complètement le dispositif de détection de fuite (10) uniquement lorsque la vanne d'isolement (20) est fermée.

2. Dispositif de détection de fuite (10) selon la revendication 1, **caractérisé en ce que** le dispositif de détection de fuite (10) présente une unité d'évaluation qui détecte les valeurs de mesure des pressions p(t1), p(t2), commande la vanne d'aération (V3, V3a) et exécute automatiquement l'appréciation de l'état de fermeture de la vanne d'isolement.

3. Dispositif de détection de fuite (10) selon la revendication 1 ou 2, **caractérisé en ce que** la vanne d'aération (V3, V3a) est reliée à la conduite de liaison (18) par l'intermédiaire d'un étranglement (26).

4. Dispositif de détection de fuite (10) selon l'une quelconque des revendications précédentes, **caractérisé en ce que** le détecteur de gaz (12) est un spectromètre de masse et la pompe à vide (14) est une pompe à vide poussé avec au moins deux étages de pompage.

5. Dispositif de détection de fuite (10) selon l'une quelconque des revendications précédentes, **caractérisé en ce que** la première vanne d'aération (V3) et/ou une deuxième vanne d'aération (V3a) présentent une ouverture vers l'atmosphère qui est fermée par un filtre à pores fins, qui réduit un apport de particules provenant de l'atmosphère dans le dispositif de détection de fuite (10).

6. Procédé d'aération d'un dispositif de détection de fuite (10) avec un détecteur de gaz (12), une pompe à vide (14), un raccord (16) pour un objet à tester (22) et une conduite de liaison (18) reliant le raccord (16) au détecteur de gaz (12) et à la pompe à vide (14), **caractérisé par** les étapes :

   - de mesure de la pression p(t1) sur le raccord (16) à un premier moment t1,
   - d'amenée par impulsions de gaz provenant de l'atmosphère environnante ou d'une alimentation en gaz au raccord (16),
   - de mesure de la pression p(t2) au moins à un deuxième moment t2 > t1 après l'amenée de gaz au raccord (16),
   - d'appréciation de l'état de fermeture d'une vanne d'isolement (20) raccordée au raccord (16), qui est prévue pour la liaison entre le raccord (16) et l'objet à tester (22), à l'aide des valeurs de mesure p(t1), p(t2) des pressions mesurées sur le raccord (16), pour empêcher une aération d'un objet à tester (22) raccordé au raccord (16), en ouvrant la vanne d'aération (V3, V3a) pour l'aération complète du dispositif de détection de fuite (10) uniquement lorsque la vanne d'isolement (20) est fermée.

7. Procédé selon la revendication précédente, **caractérisé en ce que**, pour apprécier l'état de fermeture de la vanne d'isolement (20), la différence est formée à partir de la valeur de mesure de la pression p(t1) et de la valeur de mesure de la pression p(t2) et la vanne d'isolement (20) est considérée comme fermée lorsque la différence est supérieure à une valeur de seuil et dans lequel la vanne d'isolement (20) est considérée comme ouverte lorsque la différence est inférieure à la valeur de seuil.

8. Procédé selon l'une quelconque des revendications précédentes, **caractérisé en ce que**, pour apprécier l'état de fermeture de la vanne d'isolement (20), l'évolution du signal de mesure présentant les valeurs de mesure de pression p est déterminée et évaluée pendant une période, par exemple en déterminant la pente et/ou la courbure de l'évolution du signal.

9. Procédé selon l'une quelconque des revendications précédentes, **caractérisé en ce que**, pour apprécier l'état de fermeture de la vanne d'isolement (20), une dérivée mathématique de l'évolution du signal de mesure présentant les valeurs de mesure de pression p est déterminée et évaluée pendant une période, par exemple en déterminant la première et/ou une autre dérivée de l'évolution du signal.

10. Procédé selon l'une quelconque des revendications 7 à 9, **caractérisé en ce que** le raccord (16) est automatiquement aéré lorsque la différence est supérieure à la valeur de seuil et/ou que la vanne d'isolement (20) est considérée comme fermée.

11. Procédé selon l'une quelconque des revendications 7 à 10, **caractérisé en ce que** le raccord (16) n'est pas aéré lorsque la différence est inférieure à la valeur de seuil et/ou que la vanne d'isolement (20) est considérée comme ouverte.

12. Procédé selon l'une quelconque des revendications précédentes, **caractérisé en ce que** l'amenée de gaz au raccord (16) est effectuée avant la mesure de la pression p(t2) et après la mesure de la pression p(t1) pendant une période de quelques secondes et de préférence inférieure à une seconde.

**13.** Procédé selon la revendication 12, **caractérisé en ce que** la mesure de la pression p(t2) est effectuée dans une période d'au moins 50 millisecondes et inférieure à une seconde après l'aération du raccord (16).

**14.** Dispositif ou procédé selon l'une quelconque des revendications précédentes, **caractérisé en ce que** l'aération du dispositif de détection de fuite (10) est effectuée, dans le cas d'une vanne d'isolement (20) identifiée comme fermée, avec une autre vanne que l'amenée de gaz au raccord (16) entre les mesures des deux pressions p(t1), p(t2) sur le raccord (16).

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014219481 A1

- US 6286362 B1